# EUROPEAN PATENT SPECIFICATION

(11) **EP 4 450 371 B1**
(45) Date of publication and mention of the grant of the patent: **26.11.2025**
(21) Application number: 23188438.8
(22) Date of filing: 28.07.2023
(51) Int. Cl.: B62D 11/08

(54) **METHOD, APPARATUS, VEHICLE, AND STORAGE MEDIUM FOR VEHICLE CONTROL BASED ON AN ELECTRONIC PARK BRAKE**
VERFAHREN, VORRICHTUNG, FAHRZEUG UND SPEICHERMEDIUM ZUR FAHRZEUGSTEUERUNG AUF BASIS EINER ELEKTRONISCHEN FESTSTELLBREMSE
PROCÉDÉ, APPAREIL, VÉHICULE ET SUPPORT D'INFORMATIONS POUR COMMANDE DE VÉHICULE SUR LA BASE D'UN FREIN DE STATIONNEMENT ÉLECTRONIQUE

(30) Priority: 23.03.2023 CN 202310297272
(43) Date of publication of application: 23.10.2024
(73) Proprietor: Xiaomi EV Technology Co., Ltd., 100176 Beijing (CN)
(72) Inventor: JIN, Cheng, Beijing, 100176 (CN)
(74) Representative: dompatent

(56) References cited:
- CN-A- 101 564 997
- JP-A- S53 100 538
- US-A- 6 019 436
- US-A1- 2003 226 727

## Description

### TECHNICAL FIELD

The disclosure relates to the technical field of vehicle control, and more particularly relates to method, apparatus, vehicle, and storage medium for vehicle control based on an Electronic Park Brake.

### BACKGROUND

Document JP S53 100538 A discloses a mechanical parking brake which can be used for steering an agricultural vehicle, by selectively actuating only the rakes on one side.

Nowadays electronic parking brakes have generally replaced mechanical parking brakes in road vehicles.

The Electric Park Brake (EPB) is commonly known as an electronic handbrake and can perform temporary braking during driving and long duration braking after parking, and when parking by the Electric Park Brake, after a driver steps on a brake pedal to make a vehicle stationary, parking can be performed by pulling up an Electronic Park Brake button.

When the vehicle is parked by the Electronic Park Brake, the braking system simultaneously applies a braking force to all wheels of a plurality of vehicles, so that when an accelerator pedal is stepped to a certain depth, the Electronic Park Brake is turned off and the braking system simultaneously releases the braking force applied to each wheel in a case where the driving force of the vehicle overcomes the current resistance. As a result, the use scenario of the electronic handbrake is single, and the flexibility is low.

### SUMMARY

To overcome the problems of the related art, the disclosure provides a method, apparatus, vehicle, and storage medium for vehicle control based on an Electronic Park Brake.

According to a first aspect of examples of the disclosure, there is provided a method for vehicle control based on an Electronic Park Brake, the Electronic Park Brake includes a plurality of switch buttons, one of the switch buttons correspondingly controls wheels on one side of a vehicle, and the method includes:
obtaining a vehicle speed and a steering function state of the vehicle in response to an up-shifting operation (also referred to as an activating operation) on any one of the switch buttons by a driver;
determining target-side wheels from both side wheels of the vehicle according to the vehicle speed and the steering function state;
determining at least one target brake wheel from the target-side wheels; and
braking the target brake wheel by a braking system of the vehicle.

Optionally, before the step of determining target-side wheels from both side wheels of the vehicle according to the vehicle speed and the steering function state:
determining that the driver performs an up-shifting operation on the switch button corresponding to the wheels on either side;
the method further including:
if the plurality of the switch buttons are simultaneously shifted-up by the driver, braking all the wheels of the vehicle by the braking system of the vehicle.

Optionally, the method further includes:
releasing braking of the target brake wheel by the brake system of the vehicle in response to a release operation of the driver on the switch button that is shifted-up if the driver performs an up-shifting operation on the switch button corresponding to the wheels on either side.

Optionally, the method further includes:
releasing braking of the target brake wheel on the side corresponding to depressed switch buttons by the braking system of the vehicle in response to a depress operation on any one of the switch buttons by the driver if the driver simultaneously performs the up-shifting operation on the plurality of the switch buttons.

Optionally, the step of determining target-side wheels from both side wheels of the vehicle according to the vehicle speed and the steering function state includes:
in a case where the vehicle speed is greater than a preset vehicle-speed threshold, and the steering function state indicates that the steering system of the vehicle is out of work, determining, from both side wheels of the vehicle, wheels on a side corresponding to the shifted-up switch button as the target-side wheels;
in a case where the vehicle speed is greater than a preset vehicle-speed threshold, and the steering function state indicates that the steering system of the vehicle is in work, determining both side wheels of the vehicle as the target-side wheels; and
in a case where the vehicle speed is less than or equal to a preset vehicle-speed threshold and the steering function state indicates that the steering system of the vehicle is in work, determining, from both side wheels of the vehicle, wheels on a side corresponding to the shifted-up switch button as the target-side wheels.

Optionally, the step of determining at least one target brake wheel from the target-side wheels includes:
in a case where the wheels on the side corresponding to the shifted-up switch button (also referred to as the activated switch button) are determined as the target-side wheels, if the vehicle speed is greater than the preset vehicle speed threshold, determining a steered wheel and a driven wheel on a side corresponding to the shifted-up switch button as the target brake wheel; if the vehicle speed is less than or equal to the preset vehicle-speed threshold, determining a driven wheel on a side corresponding to the shifted-up switch button as the target brake wheel.

Optionally, the step of braking the target brake wheel by a braking system of the vehicle includes:
obtaining a maximum braking force provided by the braking system of the vehicle if a steered wheel and a driven wheel on a side corresponding to the shifted-up switch button are determined as the target brake wheel;
dividing the maximum braking force into a steered wheel braking force and a driven wheel braking force in accordance with a preset wheel braking ratio;
braking the steered wheel on a side of the vehicle where the target brake wheel is located by the brake system of the vehicle according to the steered wheel braking force; and
braking the driven wheel on a side of the vehicle where the target brake wheel is located by the brake system of the vehicle according to the driven wheel braking force.

Optionally, the steered wheel braking force is greater than the driven wheel braking force.

Optionally, the plurality of the switch buttons are disposed side by side, the plurality of the switch buttons are slidably provided with an integral button assembly, the plurality of the switch buttons are able to be shifted up together when the integral button assembly slides to cover the plurality of the switch buttons, and the plurality of the switch buttons are able to be shifted up individually when the integral button assembly slides to expose the plurality of the switch buttons.

Optionally, a direction in which the plurality of the switch buttons are arranged side by side coincides with a left-right direction of the vehicle. In other words, the plurality of the switch buttons may be arranged parallel to the lateral axis (also referred to as the transversal axis or the short axis) of the vehicle.

According to a second aspect of the examples of the disclosure, there is provided an apparatus for vehicle control based on an Electronic Park Brake, wherein the Electronic Park Brake comprises a plurality of switch buttons, one of the switch button correspondingly controls wheels on one side of a vehicle, and the apparatus includes:
an obtaining module, configured to obtain a vehicle speed and a steering function state of the vehicle in response to an up-shifting operation on any one of the switch buttons by a driver;
a first determining module, configured to determine target-side wheels from both side wheels of the vehicle according to the vehicle speed and the steering function state;
a second determining module, configured to determine a target brake wheel from the target-side wheels; and
a control module, configured to brake the target brake wheel by a braking system of the vehicle.

Optionally, the first determining module is configured to determine that the driver performs an up-shifting operation on the switch button corresponding to the wheels on either side before the step of determining target-side wheels from both side wheels of the vehicle according to the vehicle speed and the steering function state; and
the second determining module is configured to, if the plurality of the switch buttons are simultaneously shifted-up by the driver, brake all the wheels of the vehicle by the braking system of the vehicle.

Optionally, the control module is configured to release braking of the target brake wheel by the brake system of the vehicle in response to a release operation of the driver on the switch button that is shifted-up if the driver performs an up-shifting operation on the switch button corresponding to the wheels on either side.

Optionally, the control module is configured to release braking of the target brake wheel on the side corresponding to depressed switch buttons by the braking system of the vehicle in response to a depress operation on any one of the switch buttons by the driver if the driver simultaneously performs the up-shifting operation on the plurality of the switch buttons.

Optionally, the second determining module is configured to:
in a case where the vehicle speed is greater than a preset vehicle-speed threshold, and the steering function state indicates that the steering system of the vehicle is out of work, determine, from both side wheels of the vehicle, wheels on a side corresponding to the shifted-up switch button as the target-side wheels;
in a case where the vehicle speed is greater than a preset vehicle-speed threshold, and the steering function state indicates that the steering system of the vehicle is in work, determine both side wheels of the vehicle as the target-side wheels; and
in a case where the vehicle speed is less than or equal to a preset vehicle-speed threshold and the steering function state indicates that the steering system of the vehicle is in work, determine, from both side wheels of the vehicle, wheels on a side corresponding to the shifted-up switch button as the target-side wheels.

Optionally, the second determining module is configured to:
in a case where the wheels on the side corresponding to the shifted-up switch buttons are determined as the target-side wheels, if the vehicle speed is greater than the preset vehicle speed threshold, determine a steered wheel and a driven wheel on a side corresponding to the shifted-up switch button as the target brake wheel; if the vehicle speed is less than or equal to the preset vehicle-speed threshold, determine a driven wheel on a side corresponding to the shifted-up switch button as the target brake wheel.

Optionally, the control module is configured to:
obtain a maximum braking force provided by the braking system of the vehicle if a steered wheel and a driven wheel on a side corresponding to the shifted-up switch button are determined as the target brake wheel;
divide the maximum braking force into a steered wheel braking force and a driven wheel braking force in accordance with a preset wheel braking ratio;
brake the steered wheel on a side of the vehicle where the target brake wheel is located by the brake system of the vehicle according to the steered wheel braking force; and
brake the driven wheel on a side of the vehicle where the target brake wheel is located by the brake system of the vehicle according to the driven wheel braking force.

Optionally, the steered wheel braking force is greater than the driven wheel braking force.

Optionally, the plurality of the switch buttons are disposed side by side, the plurality of the switch buttons are slidably provided with an integral button assembly, the plurality of the switch buttons are able to be shifted up together when the integral button assembly slides to cover the plurality of the switch buttons, and the plurality of the switch buttons are able to be shifted up individually when the integral button assembly slides to expose the plurality of the switch buttons.

Optionally, a direction in which the plurality of the switch buttons are arranged side by side coincides with a left-right direction of the vehicle.

According to a third aspect of the examples of the disclosure, there is provided a vehicle including:
a first processor; and
a first memory for storing a first processor-executable instructions;
the first processor is configured to execute a computer program in the memory to implement the steps of the method for vehicle control based on an Electronic Park Brake of any one of the first aspect.

According to a fourth aspect of examples of the disclosure, there is provided a computer-readable storage medium, storing an executable program, the executable program implementing the steps of the method for vehicle control based on an Electronic Park Brake provided by the first aspect of the disclosure when executed by a second processor.

The technical solutions provided by the examples of the disclosure may include the following beneficial effects:
the Electronic Park Brake includes a plurality of switch buttons, one of the switch button correspondingly controls wheels on one side of a vehicle, and then a vehicle speed and a steering function state of the vehicle are obtained in response to an up-shifting operation on any one of the switch buttons by a driver; target-side wheels are determined from both side wheels of the vehicle according to the vehicle speed and the steering function state; a target brake wheel is determined from the target-side wheels; and the target brake wheel are braked by a braking system of the vehicle. A plurality of switch buttons are provided for the Electronic Park Brake, and the switch button corresponding to either side can be individually shifted up to achieve individual braking of the left and right wheels of the vehicle, or a plurality of switch buttons can be simultaneously shifted up to achieve simultaneous braking of the wheels on both sides of the vehicle. The use scenarios for the Electronic Park Brake are enriched, and the flexibility is increased.

It should be understood that the above general description and the following detailed description are merely exemplary and interpretive, and cannot limit the disclosure.

### BRIEF DESCRIPTION OF THE DRAWINGS

The accompanying drawings here are incorporated into and constitute part of the description, illustrate the examples conforming to the disclosure, and are used together with the description to interpret the principles of the disclosure.
Fig. 1 is a flowchart illustrating a method for vehicle control based on an Electronic Park Brake according to an example.
Fig. 2 is a flowchart illustrating another method for vehicle control based on an Electronic Park Brake according to an example.
Fig. 3 is a flowchart illustrating yet another method for vehicle control based on an Electronic Park Brake according to an example.
Fig. 4 is a flowchart for implementing step S14 of Fig. 2 according to an example.
Fig. 5 is a block diagram illustrating a vehicle control apparatus based on an Electronic Park Brake according to an example.
Fig. 6 is a functional block diagram of a vehicle according to an example.

### DETAILED DESCRIPTION

Examples, which are shown in the drawings, will be explained in detail here. When the following description involves drawings, the same numbers in different drawings represent the same or similar elements unless otherwise stated. The implementations described in the following examples do not represent all implementations consistent with the disclosure. On the contrary, the implementations are just examples of apparatuses and methods consistent with some aspects of the disclosure as detailed in the attached claims.

It should be noted that all actions of obtaining signals, information or data in this application are performed under the premise of complying with the corresponding data protection regulations and policies of the local country and with the authorization given by the corresponding device owner.

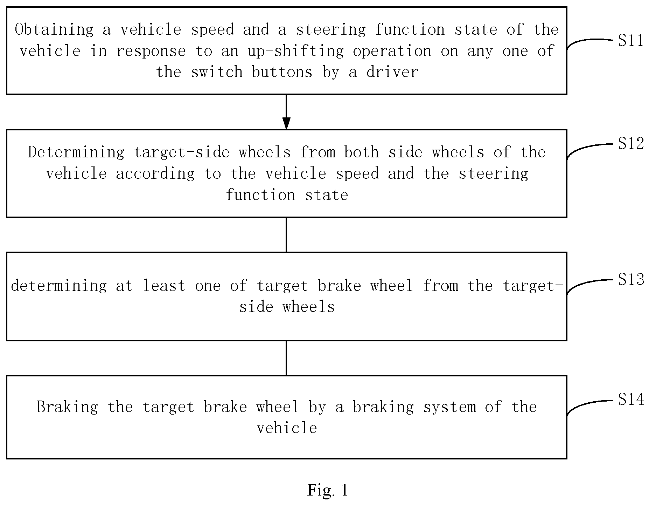

Fig. 1 is a flowchart illustrating a method for vehicle control based on an Electronic Park Brake according to an example, as can be understood, when a plurality of switch buttons are provided for the Electronic Park Brake in a vehicle cab, one of the switch button correspondingly controls the wheels on one side of the vehicle, for example, a plurality of switch buttons are placed behind a gear lever of the vehicle or near the left of a driver's seat, as shown in Fig. 1, the method for vehicle control based on an Electronic Park Brake includes the following steps.

In step S11, a vehicle speed and a steering function state of the vehicle are obtained in response to an up-shifting operation on any one of the switch buttons by a driver.

The up-shifting operation of any one of the switch buttons may be the up-shifting operation of one of the plurality of switch buttons or the up-shifting operation of two of the plurality of switch buttons.

The plurality of switch buttons can be left and right switch buttons, which can achieve one-side braking of left and right wheels, or can be set according to wheels, for example, the number of switch buttons is the same as the number of wheels.

The steering function state in the example of the disclosure is used to determine whether the steering function of the vehicle has failed, for example, whether the steering function of the vehicle effects is determined by obtaining a state signal of a steering assist motor.

In step S12, target-side wheels are determined from both side wheels of the vehicle according to the vehicle speed and the steering function state.

It can be stated that, if the steering function state characterizes a vehicle steering function failure and the vehicle speed is greater than 0, it can be determined that the driving intention of the driver is to pull over by braking, the pull-over braking is to take wheels of one side of the vehicle as the target-side wheels, and if the steering function state characterizes that the vehicle steering function is effective and the vehicle speed is greater than 0, it can be determined that the driving intention of the driver is emergency braking, which takes wheels on both sides of the vehicle as the target-side wheels.

In step S13, a target brake wheel is determined from the target-side wheels.

For example, the target brake wheel may be determined from the target-side wheels based on a brake pedal signal or an accelerator pedal signal. By way of example, in the case where the brake pedal signal characterizes that the driver depresses the brake pedal, the steered wheel and the driven wheel on the side corresponding to the switch button which is shifted up are determined as the target brake wheel; in a case where the brake pedal signal characterizes that the driver depresses the accelerator pedal, the driven wheel on the side corresponding to the switch button which is shifted up is determined as the target brake wheel.

In step S14, the target brake wheel is braked by a braking system of the vehicle.

At this time, neither of the non-target-side wheels of the vehicle nor the non-target-brake wheels of the target-side wheels is applied with a braking force by the braking system of the vehicle.

For example, for the target brake wheel, hydraulic braking may be performed, the braking force may be calibrated according to the current vehicle speed of the vehicle, for example, braking is performed at 2 meters per second squared or 4 meters per second squared. If hydraulic braking fails, braking is performed by calipers of the vehicle.

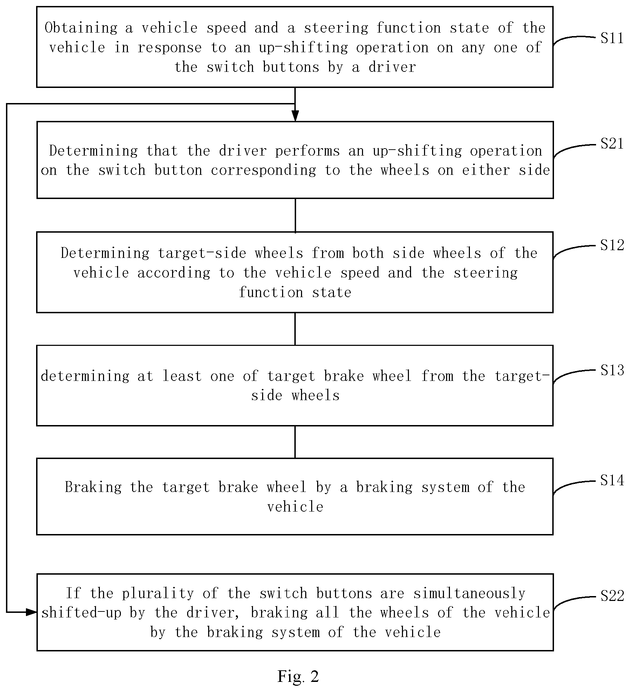

In one example, referring to Fig. 2, before the step S12 that the target-side wheels are determined from both side wheels of the vehicle according to the vehicle speed and the steering function state the method includes:
step S21, it is determined that the driver performs an up-shifting operation on the switch button corresponding to the wheels on either side.

The driver performs an up-shifting operation on the switch buttons corresponding to the wheels on either side, which indicates that the driving intention of the driver is one-sided braking, for example, when the steering system of the vehicle malfunction during driving, steering turn is achieved by one-sided wheel braking. As another example, in a case where a vehicle turns around, by braking the driven wheel in the one-sided wheels, the wheel speed of the driven wheel is reduced while the wheel speed of the steering wheel is unchanged, thus reducing the turning radius of the vehicle.

The method for vehicle control based on an Electronic Park Brake further includes a step S22 that, if the plurality of the switch buttons are simultaneously shifted-up by the driver, all the wheels of the vehicle are braked by the braking system of the vehicle.

In an example of the disclosure, the driver simultaneously performs an up-shifting operation on a plurality of switch buttons, for example, the driver performs the up-shifting operation on an arc for performance of the up-shifting operation by one or more fingers, or the driver slides the integral button assembly to cover the plurality of the switch buttons as described later in the disclosure to perform the up-shifting operation, which indicates that the driving intention of the driver is to brake all the wheels of the vehicle, such as emergency braking or hill starting braking. In this case, braking can be performed by hydraulic braking, or by calipers, as in the prior art. Also, if the vehicle speed is greater than the preset vehicle speed threshold, deceleration braking may be performed at, for example, 6 meters per second squared.

In this way, the plurality of switch buttons can both one-sided wheel braking and simultaneous braking of all the wheels according to the up-shifting operation of the driver, thus improving the use scenario of the Electronic Park Brake of the vehicle, and improving not only the functionality but also the driving safety of the vehicle.

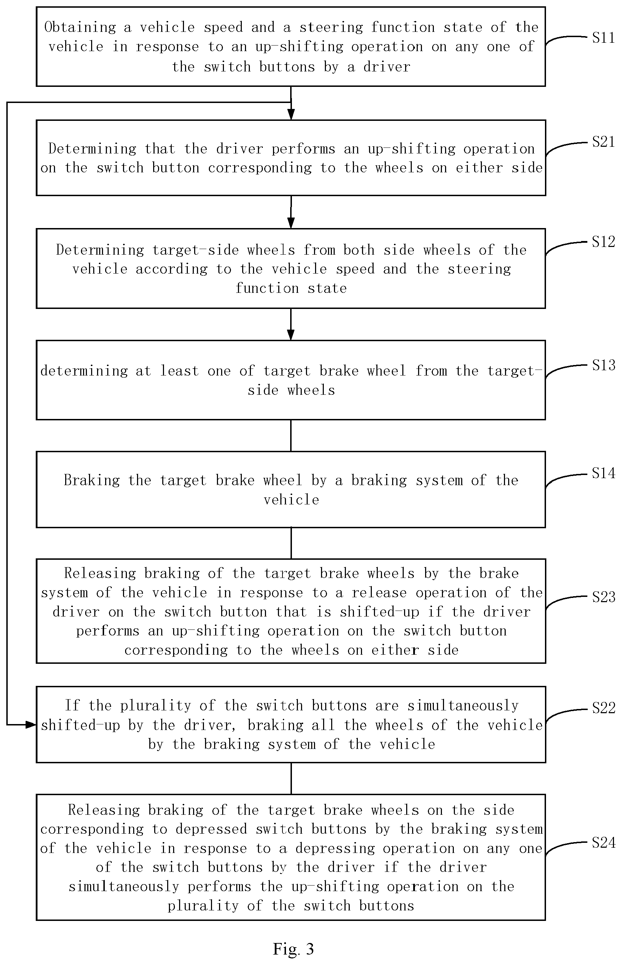

In one example, as shown in Fig. 3, the method further includes:
in step S23, braking of the target brake wheel by the brake system of the vehicle are released in response to a release operation of the driver on the switch button that is shifted-up if the driver performs an up-shifting operation on the switch button corresponding to the wheels on either side.

It can be described that merely in the case where the up-shifting operation of the driver is received continuously, it is determined that the driving intention of the driver is to brake the one-sided wheels, and the target brake wheel is continuously braked by the braking system of the vehicle. If the driver releases the up-shifting operation of the switch button, it is determined that the driving intention of the driver is not to brake any wheel.

In the disclosure, releasing braking may be understood as that the braking system does not brake the target brake wheel of the vehicle through a hydraulic system or calipers.

In step S24, braking of the target brake wheel on the side corresponding to the depressed switch buttons by the braking system of the vehicle are released in response to a depress operation on any one of the switch buttons by the driver if the driver simultaneously performs the up-shifting operation on the plurality of the switch buttons.

It should be noted that when the driver simultaneously performs the up-shifting operation on the plurality of switch buttons, it can be determined that the driving intention of the driver is to perform parking the vehicle by braking, such as increasing braking force on the vehicle by the Electronic Park Brake in an emergency, or performing parking braking force on the vehicle by the Electronic Park Brake in a parking state. At this time, when the signal corresponding to the depressing operation is received, it is determined that the driving intention of the driver is to drive the vehicle, and the braking of the target brake wheel on the side corresponding to the depressed switch button can be released by the braking system of the vehicle.

In one example, in the step S12, the step that the target-side wheels are determined from the both side wheels of the vehicle according to the vehicle speed and the steering function state includes:
in a case where the vehicle speed is greater than a preset vehicle-speed threshold, and the steering function state indicates that the steering system of the vehicle is out of work, from both side wheels of the vehicle, wheels on a side corresponding to the shifted-up switch button are determined as the target-side wheels.

In the case where the vehicle speed is greater than the preset vehicle speed threshold and the steering function state characterizes the steering failure of the steering system of the vehicle, if the driver performs the up-shifting operation to the switch button corresponding to the wheels on either side, it is indicated that the driving intention of the driver is to pull over. Thus, the wheels on the side corresponding to the switch button which is shifted up are determined as the target-side wheels, so that the vehicle turns to the side corresponding to the switch button which is shifted up.

In a case where the vehicle speed is greater than a preset vehicle-speed threshold, and the steering function state indicates that the steering system of the vehicle is in work, both side wheels of the vehicle are determined as the target-side wheels.

In the case where the vehicle speed is greater than the preset vehicle speed threshold, and the steering function state characterizes that the steering system of the vehicle is effective, it is indicated that the driving intention of the driver is emergency brake parking, parking is merely performed in the lane the vehicle is traveling and no turning, so that the wheels on both sides of the vehicle are determined as the target-side wheels.

In a case where the vehicle speed is less than or equal to a preset vehicle-speed threshold and the steering function state indicates that the steering system of the vehicle is in work, from both side wheels of the vehicle, wheels on a side corresponding to the shifted-up switch button are determined as the target-side wheels.

In the case where the vehicle speed is less than or equal to the preset vehicle speed threshold and the steering function state characterizes that the steering system of the vehicle is effective, if the driver performs the up-shifting operation on the switch button corresponding to either side of the wheels, it is indicated that the driving intention of the driver is to turn around, and thus, the wheels on the side corresponding to the switch button being shifted up are determined as the target-side wheels, for example, the braking force applied to the a steered wheel on the side corresponding to the switch button being shifted up is smaller than the braking force applied to the driven wheel on the side corresponding to the switch button being shifted up, thus enabling the vehicle to turn around at a small angle.

In one example, in the step S13, the step that the target brake wheel is determined from the target-side wheels includes:
in a case where the wheels on the side corresponding to the shifted-up switch button are determined as the target-side wheels, if the vehicle speed is greater than the preset vehicle speed threshold, a steered wheel and a driven wheel on a side corresponding to the shifted-up switch button are determined as the target brake wheel.

If the vehicle speed is less than or equal to the preset vehicle-speed threshold, a driven wheel on a side corresponding to the shifted-up switch button is determined as the target brake wheel.

It may be stated that a steered wheel is a wheel that is mechanically connected to the steering system of the vehicle, for example, both left and right front wheels of the vehicle are a steered wheel, and a driven wheel is a wheel that is not mechanically connected to the steering system of the vehicle, for example, both left and right rear wheels of the vehicle are a driven wheel.

If the vehicle speed is greater than a preset vehicle speed threshold, for example, the preset vehicle speed threshold may be 10 meters per second, if the vehicle speed is greater than 10 meters per second, both the steered wheel and the driven wheel on the side corresponding to the switch button being shifted up are determined as the target brake wheel; if the vehicle speed is 10 meters per second or less, the driven wheel on the side corresponding to the switch button being shifted up is determined as the target brake wheel, and the steered wheel on the side corresponding to the switch button being shifted up is not applied with the braking force.

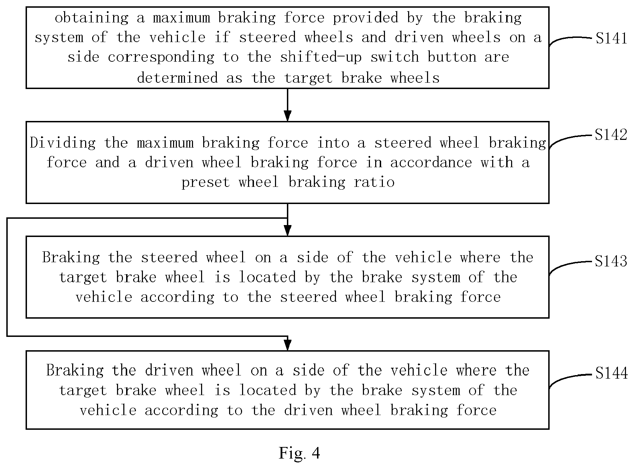

In one example, referring to Fig. 4, in step S14, the step that the target brake wheel is braked by a braking system of the vehicle includes:

In step S141, a maximum braking force provided by the braking system of the vehicle is obtained if steered wheel and a driven wheel on a side corresponding to the shifted-up switch button are determined as the target brake wheel.

As can be seen from the foregoing, in the case where a steered wheel and a driven wheel on one side of the vehicle are the target brake wheel, the driving intention of the driver to operate the switch button of the electronic park brake is to pull over, and the pull-over of the vehicle may indicate that the brake system of the vehicle brakes the steered wheel and the driven wheel, respectively.

The maximum braking force that the braking system can provide may be determined by the brake master cylinder pressure.

In step S142, the maximum braking force is divided into a steered wheel braking force and a driven wheel braking force in accordance with a preset wheel braking ratio.

The preset wheel braking ratio is used to distribute the maximum braking force to enable faster turning parking of the vehicle. The preset wheel braking ratio may be calibrated in advance according to the vehicle speed, for example, the larger the vehicle speed, the smaller the proportion corresponding to the steered wheel of the preset wheel braking ratio, and the larger the proportion corresponding to the a driven wheel of the preset wheel braking ratio. The smaller the vehicle speed, the larger the proportion corresponding to the a steered wheel of the preset wheel braking ratio, and the smaller the proportion corresponding to the a driven wheel of the preset wheel braking ratio. This may improve the pull-over safety of the vehicle.

In step S143, a steered wheel on a side of the vehicle where the target brake wheel is located is braked by the brake system of the vehicle according to the steered wheel braking force.

In step S144, a driven wheel on a side of the vehicle where the target brake wheel is located is braked by the brake system of the vehicle according to the driven wheel braking force.

In the above technical solution, the maximum braking force of the braking system is distributed, and the vehicle can be braked reasonably.

In one example, the steered wheel braking force is greater than the driven wheel braking force.

In the example of the disclosure, in the case where the steered wheel braking force is greater than the driven wheel braking force, the steered wheel braking of the vehicle generates a yaw angle due to the larger braking force of the steered wheel, the vehicle is braked under the effect of the driven wheel braking force, and the vehicle is turned at a small angle under the effect of the steered wheel braking force, thus assisting the driver to pull over the vehicle.

The description is given by taking situation that the driver shifts up the switch button corresponding to the wheels on the right side of the vehicle as an example, in a case where the vehicle speed is greater than the preset vehicle speed threshold and the steering function state characterizes a steering failure of the steering system of the vehicle, the braking system of the vehicle exerts a large braking force on the front right wheel and a small braking force on the rear right wheel, while neither the front left wheel nor the rear left wheel of the vehicle exerts a braking force, and the vehicle generates a yaw angle, so that the vehicle turns to the right side by a small angle to achieve parking on the right.

In the above technical solution, the Electronic Park Brake includes a plurality of switch buttons, and one switch button correspondingly controls wheels on one side of the vehicle, so that a vehicle speed and a steering function state of the vehicle are obtained in response to an up-shifting operation on any switch button by a driver; target-side wheels are determined from both side wheels of the vehicle according to the vehicle speed and the steering function state; a target brake wheel is determined from the target-side wheels; the target brake wheel is braked by a braking system of the vehicle. A plurality of switch buttons are provided for the Electronic Park Brake, and the switch button corresponding to either side can be individually shifted up to achieve individual braking of the left and right wheels of the vehicle, or a plurality of switch buttons can be simultaneously shifted up to achieve simultaneous braking of the wheels on both sides of the vehicle, thus enriching the use scenarios of the Electronic Park Brake, and improving the flexibility.

Optionally, the plurality of the switch buttons are disposed side by side, the plurality of the switch buttons are slidably provided with an integral button assembly, the plurality of the switch buttons are able to be shifted up together when the integral button assembly slides to cover the plurality of the switch buttons, and the plurality of the switch buttons are able to be shifted up individually when the integral button assembly slides to expose the plurality of the switch buttons.

In an example of the disclosure, the plurality of switch buttons may be arranged in front and rear side by side, or left and right side by side, the front and rear means that one end where the front wheel is located is front and one end where the rear wheel is located is rear in a normal running state of the vehicle. Similarly, left and right means that the side on which the left wheel is located is left and the side on which the right wheel is located is right in the normal running state of the vehicle.

For example, sliding slots may be provided on a leftmost switch button and a rightmost switch button of the plurality of switch buttons, the left edge of the integral button assembly snaps into the sliding slot of the leftmost switch button, the right edge snaps into the sliding slot of the rightmost switch button, the integral button assembly may be, for example, a sheet-like structure, covers an upper surface of the plurality of switch buttons, or covers the arc for the driver to perform the up-shifting operation, the integral button assembly may also be, for example, an empty housing structure, covers the upper surface of the plurality of switch buttons and the arc for the driver to perform the up-shifting operation, further, it is possible to slide the integral button assembly forward or backward to expose the plurality of switch buttons arranged side by side, or to cover the plurality of switch buttons arranged side by side by the integral button assembly so that the plurality of switch buttons can be shifted up or depressed together.

As yet another example, sliding slots may be provided at adjacent parts of switch buttons, by taking two switch buttons as an example, a sliding slot may be provided at adjacent surfaces of a left switch button and a right switch button, and/or a sliding slot may be provided at adjacent surfaces of a right switch button and a left switch button, whereby the integral button assembly may slide forward or backward to expose the plurality of switch buttons.

As yet another example, a sliding slot is penetratingly provided on an upper surface of the plurality of switch buttons arranged side by side. The penetratingly provided sliding slot is left and right penetrating the switch buttons, the left and right coinciding with a left and right direction of the vehicle. The integral button assembly may be, for example, a sheet-like structure, and the integral button assembly may be slidable leftward or rightward so as to expose the plurality of switch buttons arranged side by side.

Optionally, a direction in which the plurality of switch buttons are disposed side by side coincides with a left-right direction of the vehicle.

It can be described that, in the normal running state of the vehicle, the side on which the left wheels are located is the left side of the vehicle and the side on which the right wheels are located is the right side of the vehicle, so that the left and right direction of the vehicle is determined with the left and right wheels in the normal running state of the vehicle. This improves the ease of operation, and the driver can shift up or depress a plurality of switch buttons arranged side by side by means of one or more fingers.

Further, the side-by-side arrangement of the plurality of switch buttons may provide one switch button for the left wheels of the vehicle and one switch button for the right wheels of the vehicle. In this example, compared to the arrangement of the plurality of switch buttons side-by-side front and rear, the plurality of switch buttons are arranged side by side left and right, even if the plurality of switch buttons are not covered by the integrated button assembly, the driver can perform the up-shifting or depressing operation through one or more fingers.

In the above technical solution, the driver can normally perform braking of all the wheels of the vehicle through the switch button of the Electronic Park Brake, and can easily switch to separately operate the switch button of the Electronic Park Brake to perform braking of the wheels of one side of the vehicle, or to perform braking of the rear wheel of one side of the vehicle, thus assisting the vehicle to pull over by braking the wheels on one side of the vehicle, or assisting the vehicle to turn around by braking the rear wheel on one side of the vehicle to reduce the turning radius.

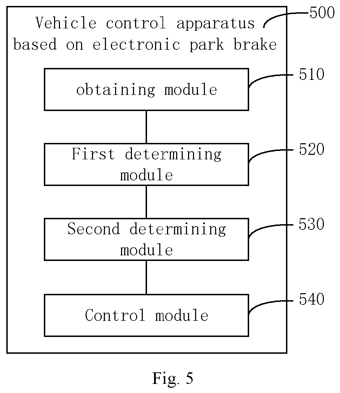

An example of the disclosure also provides an apparatus for vehicle control based on an Electronic Park Brake, the Electronic Park Brake includes a plurality of switch buttons, one of the switch button correspondingly controls wheels on one side of a vehicle. As shown in Fig. 5, the apparatus for vehicle control based on an Electronic Park Brake 500 includes an obtaining module 510, a first determining module 520, a second determining module 530 and a control module 540.

The obtaining module 510 is configured to obtain a vehicle speed and a steering function state of the vehicle in response to an up-shifting operation on any one of the switch buttons by a driver;
the first determining module 520 is configured to determine target-side wheels from both side wheels of the vehicle according to the vehicle speed and the steering function state;
the second determining module 530 is configured to determine a target brake wheel from the target-side wheels; and
the control module 540 is configured to brake the target brake wheel by a braking system of the vehicle.

Optionally, the first determining module 520 is configured to, before the step of determining target-side wheels from both side wheels of the vehicle according to the vehicle speed and the steering function state, determine that the driver performs an up-shifting operation on the switch button corresponding to the wheels on either side;
the second determining module 530 is configured to, if the plurality of the switch buttons are simultaneously shifted-up by the driver, brake all the wheels of the vehicle by the braking system of the vehicle.

Optionally, the control module 540 is configured to release braking of the target brake wheel by the brake system of the vehicle in response to a release operation of the driver on the switch button that is shifted-up if the driver performs an up-shifting operation on the switch button corresponding to the wheels on either side.

Optionally, the control module 540 is configured to release braking of the target brake wheel on the side corresponding to the depressed switch button by the braking system of the vehicle in response to a depress operation on any one of the switch buttons by the driver if the driver simultaneously performs the up-shifting operation on the plurality of the switch buttons.

Optionally, the second determining module 530 is configured to:
in a case where the vehicle speed is greater than a preset vehicle-speed threshold, and the steering function state indicates that the steering system of the vehicle is out of work, determine, from both side wheels of the vehicle, wheels on a side corresponding to the shifted-up switch button as the target-side wheels;
in a case where the vehicle speed is greater than a preset vehicle-speed threshold, and the steering function state indicates that the steering system of the vehicle is in work, determine both side wheels of the vehicle as the target-side wheels; and
in a case where the vehicle speed is less than or equal to a preset vehicle-speed threshold and the steering function state indicates that the steering system of the vehicle is in work, determine, from both side wheels of the vehicle, wheels on a side corresponding to the shifted-up switch button as the target-side wheels.

Optionally, the second determining module 530 is configured to:
in a case where the wheels on the side corresponding to the shifted-up switch button are determined as the target-side wheels, if the vehicle speed is greater than the preset vehicle speed threshold, determine a steered wheel and a driven wheel on a side corresponding to the shifted-up switch button as the target brake wheel; if the vehicle speed is less than or equal to the preset vehicle-speed threshold, determine a driven wheel on a side corresponding to the shifted-up switch button as the target brake wheel.

Optionally, the control module 540 is configured to:
obtain a maximum braking force provided by the braking system of the vehicle if a steered wheel and a driven wheel on a side corresponding to the shifted-up switch button are determined as the target brake wheel;
divide the maximum braking force into a steered wheel braking force and a driven wheel braking force in accordance with a preset wheel braking ratio;
brake the steered wheel on a side of the vehicle where the target brake wheel is located by the brake system of the vehicle according to the steered wheel braking force; and
brake the driven wheel on a side of the vehicle where the target brake wheel is located by the brake system of the vehicle according to the driven wheel braking force.

Optionally, the steered wheel braking force is greater than the driven wheel braking force.

Optionally, the plurality of the switch buttons are disposed side by side, the plurality of the switch buttons are slidably provided with an integral button assembly, the plurality of the switch buttons are able to be shifted up together when the integral button assembly slides to cover the plurality of the switch buttons, and the plurality of the switch buttons are able to be shifted up individually when the integral button assembly slides to expose the plurality of the switch buttons.

Optionally, a direction in which the plurality of the switch buttons are arranged side by side coincides with a left-right direction of the vehicle.

Regarding the vehicle control apparatus based on an Electronic Park Brake 500 in the above-described example, the specific manner in which the respective modules perform operations has been described in detail in relation to the example of the method, and will not be described in detail here.

It will be understood by those skilled in the art that the above described examples of the apparatus are merely illustrative, for example, the division of modules is merely the logical function, and other division manners can be implemented in practice, for example, a plurality of modules can be combined or integrated into one module. Furthermore, modules illustrated as separate components may or may not be physically separate. Also, each module may be implemented in whole or in part by software, hardware, firmware, or any combination of them. When implemented in software, the module may be implemented in whole or in part in the form of a computer program product. When implemented in hardware, the module may be implemented in whole or in part in the form of an integrated circuit or chip.

An example of the disclosure also provides a computer-readable storage medium, storing an executable program, the executable program implementing the steps of the method for vehicle control based on an Electronic Park Brake provided by the first aspect of the disclosure when executed by a second processor.

In accordance with an example of the disclosure, there is also provided a vehicle, including:
a first processor;
a first memory for storing a first processor-executable instructions;
the first processor is configured to execute the computer program in the memory to implement the steps of the method for vehicle control based on an Electronic Park Brake of any one of the foregoing examples.

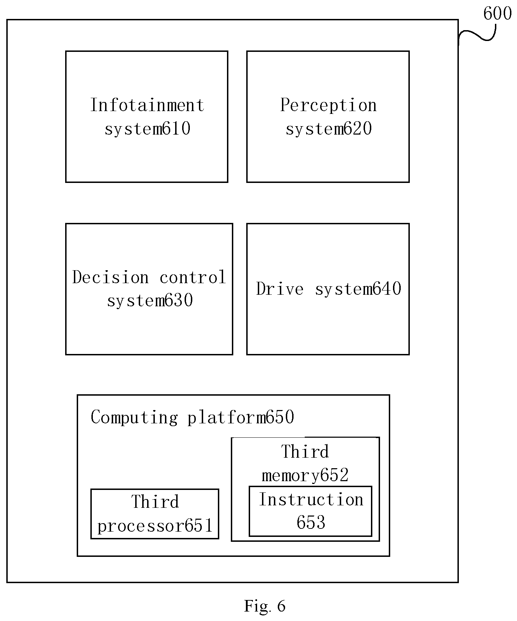

Fig. 6 is a block diagram illustrating a vehicle 600 according to an example. For example, the vehicle 600 may be a hybrid vehicle or a non-hybrid vehicle, an electric vehicle, a fuel cell vehicle, or another type of vehicle. The vehicle 600 may be an autonomous vehicle, a semi-autonomous vehicle, or a non-autonomous vehicle.

Referring to Fig. 6, the vehicle 600 may include various subsystems, such as an infotainment system 610, a perception system 620, a decision control system 630, a drive system 640, and a computing platform 650. The vehicle 600 may also include more or fewer subsystems, and each subsystem may include a plurality of components. In addition, interconnections between subsystems and between components of the vehicle 600 may be implemented by wired or wireless manners.

In some examples, the infotainment system 610 may include a communication system, an entertainment system, a navigation system, and the like.

The perception system 620 may include a number of sensors for sensing information of the environment surrounding the vehicle 600. For example, the perception system 620 may include a global positioning system (which may be a GPS system or a Beidou system or other positioning systems), an inertial measurement unit (IMU), a lidar, a millimeter-wave radar, an ultrasonic radar, and a camera.

The decision control system 630 may include a computing system, a whole vehicle controller, a steering system, a throttle, and a braking system.

The drive system 640 may include components to provide powered motion for the vehicle 600. In one example, the drive system 640 may include an engine, an energy source, a transmission system, and wheels. The engine may be one or a combination of an internal combustion engine, an electric motor, and an air compression engine. The engine is capable of converting energy provided by the energy source into mechanical energy.

Some or all of the functions of the vehicle 600 are controlled by the computing platform 650. The computing platform 650 may include at least one third processor 651 and a third memory 652, and the third processor 651 may execute instructions 653 stored in the third memory 652.

The third processor 651 may be any conventional processor, such as a commercially available CPU. The processor may also include, for example, a Graphic Process Unit (GPU), a Field Programmable Gate Array (FPGA), a System on Chip (SOC), an Application Specific Integrated Chip (ASIC), or their combination.

The third memory 652 may be implemented by any type of volatile or non-volatile storage devices, or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a Flash memory, a magnetic disk or an optical disk.

In addition to the instructions 653, the third memory 652 may store data such as road maps, route information, location, direction, and speed of the vehicle, and the like. The third memory 652 stores data that may be used by the computing platform 650.

In an example of the disclosure, the third processor 651 may execute the instruction 653 to complete all or part of the above-described method for vehicle control based on an Electronic Park Brake.

## Claims

1. A method for vehicle control based on an Electronic Park Brake, wherein the Electronic Park Brake comprises a plurality of switch buttons, one of the switch buttons correspondingly controls wheels on one side of a vehicle, and the method comprises:
obtaining a vehicle speed and a steering function state of the vehicle in response to an up-shifting operation on any one of the switch buttons by a driver (S11);
determining target-side wheels from both side wheels of the vehicle according to the vehicle speed and the steering function state (S12);
determining at least one target brake wheel from the target-side wheels (S13); and
braking the target brake wheel by a braking system of the vehicle (S14).

2. The method for vehicle control based on an Electronic Park Brake according to claim 1, further comprising, before the step of determining target-side wheels from both side wheels of the vehicle according to the vehicle speed and the steering function state:
determining that the driver performs an up-shifting operation on the switch button corresponding to the wheels on either side (S21);
optionally, the method further comprising:
Braking all the wheels of the vehicle by the braking system of the vehicle, if the plurality of the switch buttons are simultaneously shifted-up by the driver (S22).

3. The method for vehicle control based on an Electronic Park Brake according to claim 1 or claim 2, the method further comprising:
releasing the braking of the target brake wheel by the brake system of the vehicle in response to a release operation of the driver on the switch button that is shifted-up, if the driver performs an up-shifting operation on the switch button corresponding to the wheels on either side (S23).

4. The method for vehicle control based on an Electronic Park Brake according to claim 1 or claim 2, the method further comprising:
releasing the braking of the target brake wheel on the side corresponding to the depressed switch button by the braking system of the vehicle, in response to a depress operation on any one of the switch buttons by the driver, if the driver simultaneously performs the up-shifting operation on the plurality of the switch buttons (S24).

5. The method for vehicle control based on an Electronic Park Brake according to any one of claims 1 to 4, wherein the step of determining target-side wheels from both side wheels of the vehicle according to the vehicle speed and the steering function state (S12) comprises:
determining wheels on a side corresponding to the shifted-up switch button as the target-side wheels from both side wheels of the vehicle, in a case where the vehicle speed is greater than a preset vehicle-speed threshold, and the steering function state indicates that the steering system of the vehicle is out of work;
determining both side wheels of the vehicle as the target-side wheels, in a case where the vehicle speed is greater than a preset vehicle-speed threshold, and the steering function state indicates that the steering system of the vehicle is in work;
determining wheels on a side corresponding to the shifted-up switch button as the target-side wheels, from both side wheels of the vehicle, in a case where the vehicle speed is less than or equal to a preset vehicle-speed threshold and the steering function state indicates that the steering system of the vehicle is in work;.

6. The method for vehicle control based on an Electronic Park Brake according to claim 5, wherein the step of determining at least one target brake wheel from the target-side wheels (S13) comprises:
determining a steered wheel and a driven wheel on a side corresponding to the shifted-up switch button as the target brake wheel, if the vehicle speed is greater than the preset vehicle speed threshold, in a case where the wheels on the side corresponding to the shifted-up switch buttons are determined as the target-side wheels;
determining a driven wheel on a side corresponding to the shifted-up switch button as the target brake wheel, if the vehicle speed is less than or equal to the preset vehicle-speed threshold, in a case where the wheels on the side corresponding to the shifted-up switch buttons are determined as the target-side wheels.

7. The method for vehicle control based on an Electronic Park Brake according to claim 6, wherein the step of braking the target brake wheel by a braking system of the vehicle (S14) comprises:
obtaining a maximum braking force provided by the braking system of the vehicle if a steered wheel and a driven wheel on a side corresponding to the shifted-up switch button are determined as the target brake wheel (S141);
dividing the maximum braking force into a steered wheel braking force and a driven wheel braking force in accordance with a preset wheel braking ratio (S142);
braking the steered wheel on a side of the vehicle where the target brake wheel is located by the brake system of the vehicle according to the steered wheel braking force (S143); and
braking the driven wheel on a side of the vehicle where the target brake wheel is located by the brake system of the vehicle according to the driven wheel braking force (S144).

8. The method for vehicle control based on an Electronic Park Brake according to claim 7, wherein the steered wheel braking force is greater than the driven wheel braking force.

9. The method for vehicle control based on an Electronic Park Brake according to any one of claims 1 to 8, wherein, the plurality of the switch buttons are disposed side by side, the plurality of the switch buttons are slidably provided thereon with an integral button assembly, the plurality of the switch buttons are able to be shifted up together when the integral button assembly slides to cover the plurality of the switch buttons, and the plurality of the switch buttons are able to be shifted up individually when the integral button assembly slides to expose the plurality of the switch buttons.

10. The method for vehicle control based on an Electronic Park Brake according to claim 9, wherein a direction in which the plurality of the switch buttons are arranged side by side coincides with a left-right direction of the vehicle.

11. An apparatus (500) for vehicle control based on an Electronic Park Brake, wherein the Electronic Park Brake comprises a plurality of switch buttons, one of the switch button correspondingly controls wheels on one side of a vehicle, and the apparatus comprises:
an obtaining module (510), configured to obtain a vehicle speed and a steering function state of the vehicle in response to an up-shifting operation on any one of the switch buttons by a driver;
a first determining module (520), configured to determine target-side wheels from both side wheels of the vehicle according to the vehicle speed and the steering function state;
a second determining module (530), configured to determine a target brake wheel from the target-side wheels; and
a control module (540), configured to brake the target brake wheel by a braking system of the vehicle.

12. A vehicle, comprising:
a first processor; and
a first memory for storing a first processor-executable instructions;
wherein the first processor is configured to execute the first processor-executable instructions in the first memory to implement the steps of the method of any one of claims 1 to 10.

13. A computer-readable storage medium, storing an executable program, wherein the executable program, when executed by a second processor, implements the steps of the method of any one of claims 1 to 10.

## Patentansprüche

1. Verfahren zur Fahrzeugsteuerung basierend auf einer elektronischen Feststellbremse, wobei die elektronische Feststellbremse eine Vielzahl von Schalttasten aufweist, wobei eine der Schalttasten entsprechend Räder auf einer Seite eines Fahrzeugs steuert, und wobei das Verfahren ferner umfasst:
Erfassen einer Fahrzeuggeschwindigkeit und eines Lenkfunktionszustands des Fahrzeugs als Reaktion auf einen Hochschaltvorgang an einer der Schalttasten durch einen Fahrer (S11);
Bestimmen von Zielseitenrädern aus beiden Seitenrädern des Fahrzeugs entsprechend der Fahrzeuggeschwindigkeit und dem Lenkfunktionszustands (S12);
Bestimmen mindestens eines Zielbremsrads aus den Zielseitenrädern (S13); und
Bremsen des Zielbremsrads mittels eines Bremssystems des Fahrzeugs (S14).

2. Verfahren zur Fahrzeugsteuerung basierend auf einer elektronischen Feststellbremse nach Anspruch 1, das vor dem Schritt des Bestimmens von Zielseitenrädern aus beiden Seitenrädern des Fahrzeugs entsprechend der Fahrzeuggeschwindigkeit und dem Lenkfunktionszustand ferner umfasst:
Bestimmen, dass der Fahrer einen Hochschaltvorgang an der Schalttaste durchführt, die den Rädern auf beiden Seiten entspricht (S21);
wobei das Verfahren optional ferner umfasst:
Bremsen sämtlicher Räder des Fahrzeugs mittels des Bremssystems des Fahrzeugs, wenn die Vielzahl von Schalttasten gleichzeitig von dem Fahrer hochgeschaltet werden (S22).

3. Verfahren zur Fahrzeugsteuerung basierend auf einer elektronischen Feststellbremse nach Anspruch 1 oder Anspruch 2, wobei das Verfahren ferner umfasst:
Lösen der Bremse des Zielbremsrads mittels des Bremssystems des Fahrzeugs als Reaktion auf eine Lösevorgang des Fahrers an der Schalttaste, die hochgeschaltet wird, wenn der Fahrer einen Hochschaltvorgang an der Schalttaste durchführt, die den Rädern auf beiden Seiten entspricht (S23).

4. Verfahren zur Fahrzeugsteuerung basierend auf einer elektronischen Feststellbremse nach Anspruch 1 oder Anspruch 2, wobei das Verfahren ferner umfasst:
Lösen der Bremse des Zielbremsrads auf der Seite, die der gedrückten Schalttaste entspricht, mittels des Bremssystems des Fahrzeugs als Reaktion auf einen Drückvorgang auf eine der Schalttasten durch den Fahrer, wenn der Fahrer gleichzeitig den Hochschaltvorgang an der Vielzahl von Schalttasten durchführt (S24).

5. Verfahren zur Fahrzeugsteuerung basierend auf einer elektronischen Feststellbremse nach einem der Ansprüche 1 bis 4, wobei der Schritt des Bestimmens von Zielseitenrädern aus beiden Seitenrädern des Fahrzeugs entsprechend der Fahrzeuggeschwindigkeit und dem Lenkfunktionszustand (S12) umfasst:
Bestimmen von Rädern auf einer Seite, die der hochgeschalteten Schalttaste entspricht, als Zielseitenräder aus beiden Seitenrädern des Fahrzeugs, in dem Fall, dass die Fahrzeuggeschwindigkeit höher als ein vorbestimmter Fahrzeuggeschwindigkeitsschwellenwert ist und der Lenkfunktionszustand angibt, dass das Lenksystem des Fahrzeugs außer Betrieb ist;
Bestimmen beider Seitenräder des Fahrzeugs als Zielseitenräder, in dem Fall, dass die Fahrzeuggeschwindigkeit höher als ein vorbestimmter Fahrzeuggeschwindigkeitsschwellenwert ist und der Lenkfunktionszustand angibt, dass das Lenksystem des Fahrzeugs in Betrieb ist;
Bestimmen von Rädern auf einer Seite, die der hochgeschalteten Schalttaste entspricht, als Zielseitenräder aus beiden Seitenrädern des Fahrzeugs, in dem Fall, dass die Fahrzeuggeschwindigkeit niedriger als oder gleich einem vorbestimmten Fahrzeuggeschwindigkeitsschwellenwert ist und der Lenkfunktionszustand angibt, dass das Lenksystem des Fahrzeugs in Betrieb ist.

6. Verfahren zur Fahrzeugsteuerung basierend auf einer elektronischen Feststellbremse nach Anspruch 5, wobei der Schritt des Bestimmens von mindestens einem Zielbremsrad aus den Zielseitenrädern (S13) umfasst:
Bestimmen eines gelenkten Rads und eines angetriebenen Rads auf einer Seite, die der hochgeschalteten Schalttaste entspricht, als das Zielbremsrad, wenn die Fahrzeuggeschwindigkeit höher als der vorbestimmte Fahrzeuggeschwindigkeitsschwellenwert ist, in dem Fall, dass die Räder auf der Seite, die den hochgeschalteten Schalttasten entspricht, als Zielseitenräder bestimmt werden;
Bestimmen eines angetriebenen Rads auf einer Seite, die der hochgeschalteten Schalttaste entspricht, als Zielbremsrad, wenn die Fahrzeuggeschwindigkeit niedriger als oder gleich dem vorbestimmten Fahrzeuggeschwindigkeitsschwellenwert ist, in dem Fall, dass die Räder auf der Seite, die den hochgeschalteten Schalttasten entspricht, als Zielseitenräder bestimmt werden.

7. Verfahren zur Fahrzeugsteuerung basierend auf einer elektronischen Feststellbremse nach Anspruch 6, wobei der Schritt des Bremsens des Zielbremsrads mittels eines Bremssystems des Fahrzeugs (S14) umfasst:
Erfassen einer maximalen Bremskraft, die von dem Bremssystem des Fahrzeugs bereitgestellt wird, wenn ein gelenktes Rad und ein angetriebenes Rad auf einer Seite, die der hochgeschalteten Schalttaste entspricht, als Zielbremsrad bestimmt werden (S141);
Teilen der maximalen Bremskraft in eine Bremskraft eines gelenkten Rads und eine Bremskraft eines angetriebenen Rads entsprechend einem vorbestimmten Radbremsverhältnis (S142);
Bremsen des gelenkten Rads auf einer Seite des Fahrzeugs, auf der sich das Zielbremsrad befindet, mittels des Bremssystems des Fahrzeugs entsprechend der Bremskraft des gelenkten Rads (S143); und
Bremsen des angetriebenen Rads auf einer Seite des Fahrzeugs, auf der sich das Zielbremsrad befindet, mittels des Bremssystems des Fahrzeugs entsprechend der Bremskraft des angetriebenen Rads (S144).

8. Verfahren zur Fahrzeugsteuerung basierend auf einer elektronischen Feststellbremse nach Anspruch 7, wobei die Bremskraft des gelenkten Rads größer als die Bremskraft des angetriebenen Rads ist.

9. Verfahren zur Fahrzeugsteuerung basierend auf einer elektronischen Feststellbremse nach einem der Ansprüche 1 bis 8, wobei die Vielzahl der Schalttasten nebeneinander angeordnet sind, wobei die Vielzahl von Schalttasten mit einer darauf verschiebbaren integralen Tastenbaugruppe versehen sind, wobei die Vielzahl von Schalttasten gemeinsam hochgeschaltet werden können, wenn sich die integrale Tastenbaugruppe so verschiebt, dass sie die Vielzahl von Schalttasten bedeckt, und wobei die Vielzahl von Schalttasten einzeln hochgeschaltet werden können, wenn sich die integrale Tastenbaugruppe so verschiebt, dass sie die Vielzahl von Schalttasten freilegt.

10. Verfahren zur Fahrzeugsteuerung basierend auf einer elektronischen Feststellbremse nach Anspruch 9, wobei eine Richtung, in der Vielzahl von Schalttasten nebeneinander angeordnet sind, mit einer von links nach rechts verlaufenden Richtung des Fahrzeugs übereinstimmt.

11. Vorrichtung (500) zur Fahrzeugsteuerung basierend auf einer elektronischen Feststellbremse, wobei die elektronische Feststellbremse eine Vielzahl von Schalttasten aufweist, wobei eine der Schalttasten entsprechend Räder auf einer Seite eines Fahrzeugs steuert, und wobei die Vorrichtung aufweist:
ein Erfassungsmodul (510), das dazu ausgebildet ist, eine Fahrzeuggeschwindigkeit und einen Lenkfunktionszustand des Fahrzeugs als Reaktion auf einen Hochschaltvorgang an einer der Schalttasten durch einen Fahrer zu erfassen;
ein erstes Bestimmungsmodul (520), das dazu ausgebildet ist, Zielseitenräder aus beiden Seitenrädern des Fahrzeugs entsprechend der Fahrzeuggeschwindigkeit und dem Lenkfunktionszustand zu bestimmen;
ein zweites Bestimmungsmodul (530), das dazu ausgebildet ist, ein Zielbremsrad aus den Zielseitenrädern zu bestimmen; und
ein Steuermodul (540), das dazu ausgebildet ist, das Zielbremsrad mittels eines Bremssystems des Fahrzeugs zu bremsen.

12. Fahrzeug, das aufweist:
einen ersten Prozessor; und
einen ersten Speicher zum Speichern von Anweisungen, die von einem ersten Prozessor ausgeführt werden können;
wobei der erste Prozessor dazu ausgebildet ist, die von dem ersten Prozessor ausführbaren Anweisungen in dem ersten Speicher auszuführen, um die Schritte des Verfahrens nach einem der Ansprüche 1 bis 10 zu implementieren.

13. Computerlesbares Speichermedium, auf dem ein ausführbares Programm gespeichert ist, wobei das ausführbare Programm bei Ausführung durch einen zweiten Prozessor die Schritte des Verfahrens nach einem der Ansprüche 1 bis 10 implementiert.

## Revendications

1. Procédé de commande de véhicule sur la base d'un frein de stationnement électronique, dans lequel le frein de stationnement électronique comprend une pluralité de boutons de commutation, l'un des boutons de commutation commandant de manière correspondante des roues d'un côté d'un véhicule, et le procédé comprenant les étapes consistant à :
obtenir une vitesse de véhicule et un état de fonction de direction du véhicule en réponse à une opération de changement de position vers le haut de l'un quelconque des boutons de commutation par un conducteur (S11) ;
déterminer des roues de côté cible parmi des roues des deux côtés du véhicule conformément à la vitesse de véhicule et à l'état de fonction de direction (S12) ;
déterminer au moins une roue de freinage cible parmi les roues de côté cible (S13) ; et
freiner la roue de freinage cible par un système de freinage du véhicule (S14).

2. Procédé de commande de véhicule sur la base d'un frein de stationnement électronique selon la revendication 1, comprenant en outre, avant l'étape de détermination de roues de côté cible parmi des roues des deux côtés du véhicule conformément à la vitesse de véhicule et à l'état de fonction de direction, l'étape consistant à :
déterminer que le conducteur exécute une opération de changement de position vers le haut du bouton de commutation correspondant aux roues d'un côté ou de l'autre (S21) ;
le procédé comprenant en outre éventuellement l'étape consistant à :
freiner toutes les roues du véhicule par le système de freinage du véhicule si les boutons de commutation de la pluralité des boutons de commutation font l'objet d'une opération de changement de position vers le haut simultanée par le conducteur (S22).

3. Procédé de commande de véhicule sur la base d'un frein de stationnement électronique selon la revendication 1 ou la revendication 2, le procédé comprenant en outre l'étape consistant à :
relâcher le freinage de la roue de freinage cible par le système de freinage du véhicule en réponse à une opération de libération par le conducteur du bouton de commutation qui a fait l'objet d'un changement de position vers le haut, si le conducteur exécute une opération de changement de position vers le haut du bouton de commutation correspondant aux roues d'un côté ou de l'autre (S23).

4. Procédé de commande de véhicule sur la base d'un frein de stationnement électronique selon la revendication 1 ou la revendication 2, le procédé comprenant en outre l'étape consistant à :
relâcher le freinage de la roue de freinage cible du côté correspondant au bouton de commutation ayant fait l'objet d'un appui par le système de freinage du véhicule, en réponse à une opération d'appui sur l'un quelconque des boutons de commutation par le conducteur, si le conducteur exécute simultanément l'opération de changement de position vers le haut des boutons de commutation de la pluralité des boutons de commutation (S24).

5. Procédé de commande de véhicule sur la base d'un frein de stationnement électronique selon l'une quelconque des revendications 1 à 4, dans lequel l'étape de détermination de roues de côté cible parmi des roues des deux côtés du véhicule conformément à la vitesse de véhicule et à l'état de fonction de direction (S12) consiste à :
déterminer des roues d'un côté correspondant au bouton de commutation ayant fait l'objet d'un changement de position vers le haut comme étant les roues de côté cible parmi des roues des deux côtés du véhicule, dans un cas dans lequel la vitesse de véhicule est supérieure à un seuil de vitesse de véhicule prédéfini, et dans lequel l'état de fonction de direction indique que le système de direction du véhicule n'est pas en service ;
déterminer des roues des deux côtés du véhicule comme étant les roues de côté cible, dans un cas dans lequel la vitesse de véhicule est supérieure à un seuil de vitesse de véhicule prédéfini, et dans lequel l'état de fonction de direction indique que le système de direction du véhicule est en service ;
déterminer des roues d'un côté correspondant au bouton de commutation ayant fait l'objet d'un changement de position vers le haut comme étant les roues de côté cible, parmi des roues des deux côtés du véhicule, dans un cas dans lequel la vitesse de véhicule est inférieure ou égale à un seuil de vitesse de véhicule prédéfini et dans lequel l'état de fonction de direction indique que le système de direction du véhicule est en service.

6. Procédé de commande de véhicule sur la base d'un frein de stationnement électronique selon la revendication 5, dans lequel l'étape de détermination d'au moins une roue de freinage cible parmi les roues de côté cible (S13) consiste à :
déterminer une roue tournée et une roue entraînée d'un côté correspondant au bouton de commutation ayant fait l'objet d'un changement de position vers le haut comme étant la roue de freinage cible, si la vitesse de véhicule est supérieure au seuil de vitesse de véhicule prédéfini, dans un cas dans lequel les roues situées du côté correspondant aux boutons de commutation ayant fait l'objet d'un changement de position vers le haut sont déterminées comme étant les roues de côté cible ;
déterminer une roue entraînée d'un côté correspondant au bouton de commutation ayant fait l'objet d'un changement de position vers le haut comme étant la roue de freinage cible, si la vitesse de véhicule est inférieure ou égale au seuil de vitesse de véhicule prédéfini, dans un cas dans lequel les roues du côté correspondant aux boutons de commutation ayant fait l'objet d'un changement de position vers le haut sont déterminées comme étant les roues de côté cible.

7. Procédé de commande de véhicule sur la base d'un frein de stationnement électronique selon la revendication 6, dans lequel l'étape de freinage de la roue de freinage cible par un système de freinage du véhicule (S14) consiste à :
obtenir une force de freinage maximale fournie par le système de freinage du véhicule si une roue tournée et une roue entraînée d'un côté correspondant au bouton de commutation ayant fait l'objet d'un changement de position vers le haut sont déterminées comme étant la roue de freinage cible (S141) ;
diviser la force de freinage maximale en une force de freinage de roue tournée et une force de freinage de roue entraînée conformément à rapport de freinage de roue prédéfini (S142) ;
freiner la roue tournée d'un côté du véhicule au niveau duquel est située la roue de freinage cible par le système de freinage du véhicule conformément à la force de freinage de roue tournée (S143) ; et
freiner la roue entraînée d'un côté du véhicule au niveau duquel est située la roue de freinage cible par le système de freinage du véhicule conformément à la force de freinage de roue entraînée (S144).

8. Procédé de commande de véhicule sur la base d'un frein de stationnement électronique selon la revendication 7, dans lequel la force de freinage de roue tournée est supérieure à la force de freinage de roue entraînée.

9. Procédé de commande de véhicule sur la base d'un frein de stationnement électronique selon l'une quelconque des revendications 1 à 8, dans lequel les boutons de commutation de la pluralité des boutons de commutation sont disposés côte à côte, les boutons de commutation de la pluralité des boutons de commutation sont pourvus, de manière coulissante sur ces derniers, d'un ensemble bouton général, les boutons de commutation de la pluralité des boutons de commutation peuvent faire l'objet d'un changement de position vers le haut conjoint lorsque l'ensemble bouton général coulisse pour recouvrir les boutons de commutation de la pluralité des boutons de commutation, et les boutons de commutation de la pluralité des boutons de commutation peuvent faire l'objet d'un changement de position vers le haut individuel lorsque l'ensemble bouton général coulisse de façon à exposer les boutons de commutation de la pluralité des boutons de commutation.

10. Procédé de commande de véhicule sur la base d'un frein de stationnement électronique selon la revendication 9, dans lequel un sens dans lequel sont disposés côte à côte les boutons de commutation de la pluralité des boutons de commutation coïncide avec un sens gauche-droite du véhicule.

11. Appareil (500) de commande de véhicule sur la base d'un frein de stationnement électronique, dans lequel le frein de stationnement électronique comprend une pluralité de boutons de commutation, l'un des boutons de commutation commandant de manière correspondante des roues d'un côté d'un véhicule, et l'appareil comprenant :
un module d'obtention (510), configuré pour obtenir une vitesse de véhicule et un état de fonction de direction du véhicule en réponse à une opération de changement de position vers le haut de l'un quelconque des boutons de commutation par un conducteur ;
un premier module de détermination (520), configuré pour déterminer des roues de côté cible parmi des roues des deux côtés du véhicule conformément à la vitesse de véhicule et à l'état de fonction de direction ;
un second module de détermination (530), configuré pour déterminer une roue de freinage cible parmi les roues de côté cible ; et
un module de commande (540), configuré pour freiner la roue de freinage cible par un système de freinage du véhicule.

12. Véhicule, comprenant :
un premier processeur ; et
une première mémoire destinée à maintenir des instructions exécutables par processeur ;
dans lequel le premier processeur est configuré pour exécuter les premières instructions exécutables par processeur maintenues dans la première mémoire pour mettre en œuvre les étapes du procédé selon l'une quelconque des revendications 1 à 10.

13. Support d'informations lisible par ordinateur, maintenant un programme exécutable, dans lequel le programme exécutable, lorsqu'il est exécuté par un second processeur, met en œuvre les étapes du procédé selon l'une quelconque des revendications 1 à 10.
